# EUROPÄISCHE PATENTANMELDUNG

(11) **EP 2 133 616 A2**
(43) Veröffentlichungstag der Anmeldung: **16.12.2009**
(21) Anmeldenummer: 09006775.2
(22) Anmeldetag: 20.05.2009
(51) Int. Cl.: F16L 37/50

(54) **Vorrichtung zur Befestigung einer Gasleitung an einem Gasventil**

(30) Priorität: 11.06.2008 DE 102008027794
(71) Anmelder: Honeywell Technologies Sarl, 1110 Morges (CH)
(72) Erfinder: Trenz, Milos, 664 83 Domasov (CZ)
(74) Vertreter: Sturm, Christoph

(57) **Zusammenfassung**

Die Erfindung betrifft ein Vorrichtung zur Befestigung einer Gasleitung (12) an einem Gasventil, nämlich zur Befestigung einer Gasleitung an einem Anschlusselement eines Ventilkörpers des Gasventils, wobei die Vorrichtung bei der Befestigung der Gasleitung (12) am Anschlusselement (11) die Gasleitung mit einem Abschnitt gegen ein vom Anschlusselement aufgenommenes Dichtelement (14) drückt, mit einer auf die Gasleitung aufschiebbaren Klemmhülse (15) und mit einem am Anschlusselement des Ventilkörpers oder am Ventilkörper angreifenden und mit der Klemmhülse (15) derart zusammenwirkenden Klemmclip (16), dass der Klemmclip (16) mit einem Steg (19) an einer konturierten Fläche (20) der Klemmhülse (15) anliegt, und dass durch Verdrehen der Klemmhülse (15) relativ zur Gasleitung und relativ zum Klemmclip (16) der Steg (19) des Klemmclips (16) an unterschiedlichen Abschnitten der konturierten Fläche (20) anliegt und so eine axiale Relativbewegung zwischen der Gasleitung und dem Anschlusselement bewirkt.

## Beschreibung

Die Erfindung betrifft eine Vorrichtung zur Befestigung einer Gasleitung an einem Gasventil und ein Gasventil.

Ein Gasventil, wie z. B. ein Gasregelventil eines Gasbrenners, verfügt über einen Ventilkörper mit am Ventilkörper ausgebildeten Anschlusselementen für Gasleitungen. So umfasst ein als Gasregelventil ausgebildetes Gasventil ein Anschlusselement zum Anschluss einer Eingangsgasleitung und ein weiteres Anschlusselement zum Anschluss einer Ausgangsgasleitung am Ventilkörper. Bislang ist die Befestigung von Gasleitungen an den Anschlusselementen des Ventilkörpers eines solchen Gasregelventils nur mit großem Aufwand möglich, weshalb Bedarf an einer Vorrichtung zur Befestigung einer Gasleitung an einem Ventilkörper eines Gasventils besteht, mit Hilfe derer diese Befestigung einfach und sicher erfolgen kann.

Der Erfindung liegt die Aufgabe zu Grunde, eine neuartige Vorrichtung zur Befestigung einer Gasleitung an einem Gasventil und ein entsprechendes Gasventil zu schaffen. Diese Aufgabe wird durch eine Vorrichtung zur Befestigung einer Gasleitung an einem Gasventil mit den Merkmalen des Anspruchs 1 gelöst. Die erfindungsgemäße Vorrichtung umfasst eine auf die Gasleitung aufschiebbare Klemmhülse und einen am Anschlusselement des Ventilkörpers oder am Ventilkörper angreifenden und mit der Klemmhülse derart zusammenwirkenden Klemmclip, dass der Klemmclip mit einem Steg an einer konturierten Fläche der Klemmhülse anliegt, und dass durch Verdrehen der Klemmhülse relativ zur Gasleitung und relativ zum Klemmclip der Steg des Klemmclips an unterschiedlichen Abschnitten der konturierten Fläche anliegt und so eine axiale Relativbewegung zwischen der Gasleitung und dem Anschlusselement bewirkt.

Die erfindungsgemäße Vorrichtung erlaubt eine einfache und zuverlässige Befestigung von Gasleitungen an Anschlusselementen eines Ventilkörpers eines Gasventils.

Bevorzugte Weiterbildungen der Erfindung ergeben sich aus den Unteransprüchen und der nachfolgenden Beschreibung. Nachfolgend werden Ausführungsbeispiele der Erfindung, ohne hierauf beschränkt zu sein, anhand der Zeichnung näher erläutert. In der Zeichnung zeigt:
- Fig. 1:: eine mit einer erfindungsgemäßen Vorrichtung an einem Anschlusselement eines Gasventils befestigte Gasleitung; und
- Fig. 2:: die Anordnung der Fig. 1 in Explosionsdarstellung.

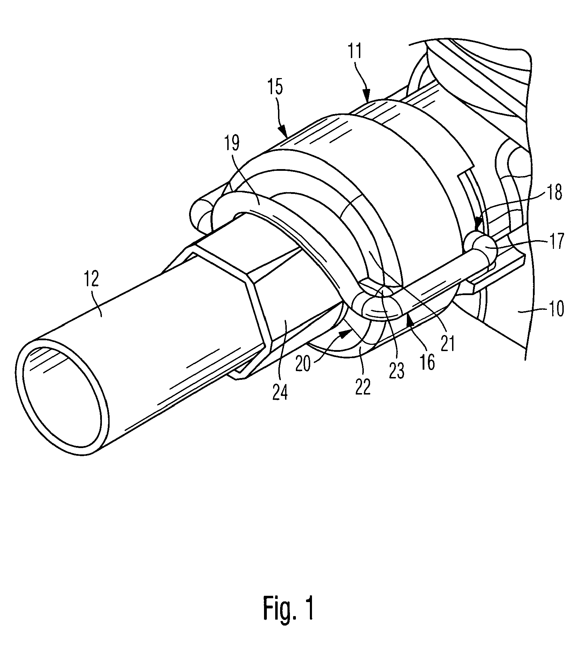

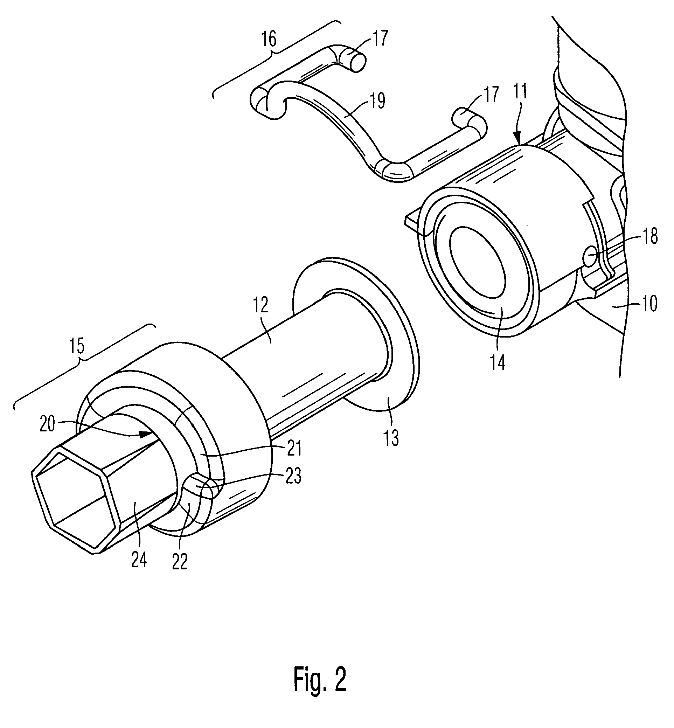

Fig. 1 und 2 zeigen ein an einem Ventilkörper 10 eines Gasventils ausgebildetes Anschlusselement 11, an welchem eine Gasleitung 12 befestigt werden soll. Wie der Explosionszeichnung der Fig. 2 entnommen werden kann, verfügt die Gasleitung 12 an dem Ende, mit welchem dasselbe am Anschlusselement 11 des Ventilkörpers 10 des Gasventils befestigt werden soll, über einen Rand 13, der zur Abdichtung der Verbindung des Gasventils 12 mit dem Anschlusselement 11 mit einem im Anschlusselement 11 aufgenommenen Dichtungselement 14 zusammenwirkt. Bei der Befestigung der Gasleitung 12 am Anschlusselement 11 drückt der Rand 13 der Gasleitung 12 gegen das im Anschlusselement 11 positionierte Dichtungselement 14.

Eine erfindungsgemäße Vorrichtung zur Befestigung der Gasleitung 12 am Anschlusselement 11 des Ventilkörpers 10 umfasst eine Klemmhülse 15 und einen mit der Klemmhülse 15 zusammenwirkenden Klemmclip 16. Die Klemmhülse 15 ist auf die Gasleitung 12 aufschiebbar und wirkt mit dem Klemmclip 16, der über Vorsprünge 17 in Ausnehmungen 18 des Anschlusselements 11 einhängbar ist, derart zusammen, dass der Klemmclip 16 mit einem Steg 19 an einer konturierten Fläche 20 der Klemmhülse 15 anliegt.

Durch Verdrehen der Klemmhülse 15 gegenüber der Gasleitung 12 und damit gegenüber dem Klemmclip 16 ändert sich die Relativposition des Stegs 19 des Klemmclips 16 zur konturierten Fläche 20 der Klemmhülse 15, so dass abhängig von der Drehstellung der Klemmhülse 15 der Steg 19 des Klemmclips 16 an unterschiedlichen Abschnitten der konturierten Fläche 15 anliegt. Hierdurch wird eine axiale Relativbewegung zwischen der Gasleitung 12 und dem Anschlusselement 11 des Ventilkörpers 10 bewirkt, wodurch eine Befestigung der Gasleitung 12 am Anschlusselement 11 erzielt werden kann.

Beim Verdrehen der Klemmhülse 15 relativ zur Gasleitung 12 bzw. relativ zum Klemmclip 16 in einer ersten Richtung wird durch das Zusammenspiel von Klemmhülse 15 und Klemmclip 16 eine solche axiale Relativbewegung zwischen der Gasleitung 12 und dem Anschlusselement 11 bewirkt, dass die Gasleitung zum Montieren derselben am Anschlusselement 11 mit ihrem Rand 13 stärker gegen das im Anschlusselement 11 aufgenommene Dichtelement 14 drückt. Beim Verdrehen der Klemmhülse 15 in einer entgegengesetzten zweiten Richtung bewirkt das Zusammenspiel von Klemmhülse 15 und Klemmclip 16 eine entgegengesetzte axiale Relativbewegung zwischen der Gasleitung 12 und dem Anschlusselement 11, so dass der Rand 13 der Gasleitung 12 beim Demontieren derselben weniger stark gegen das vom Anschlusselement 11 aufgenommene Dichtelement 14 drückt.

Die Fläche 20 der Klemmhülse 15, die mit dem Steg 19 des Klemmclips 16 zusammenwirkt, weist zwei gegenläufige, schraubenförmig konturierte Ringsegmente 21, 22 auf. Jedes dieser Ringsegmente 21, 22 der Fläche 20 der Klemmhülse 15 erstreckt sich über in etwa 180° und verfügt in Axialrichtung gesehen über eine sich verändernde Erhebung, nämlich derart, dass sich in Axialrichtung gesehen ein Abstand zwischen der Oberfläche dieser Ringsegmente 21, 22 und dem Rand 13 der Gasleitung 12 bzw. ein Abstand zwischen der Oberfläche dieser Ringsegmente 21, 22 und dem Anschlusselement 11 des Ventilkörpers 10 verändert.

Durch Verdrehen der Klemmhülse 20 um eine Rotationsachse, die sich in Axialrichtung der Gasleitung 12 erstreckt, wird dann die Gasleitung 12 ihrem Rand 13 in Axialrichtung entweder stärker oder weniger stark gegen das Dichtelement 14 gedrückt.

Fig. 1 zeigt die Klemmhülse 15 in einer Relativposition, in welcher zum Montieren der Gasleitung 12 am Anschlusselement 11 der Rand 13 derselben gegen das Dichtungselement 14 gedrückt wird. Diese Relativposition der Klemmhülse 15 wird dadurch gesichert, dass dieselbe im Bereich ihrer Ringsegmente 21, 22 über eine sich in Radialrichtung erstreckende Einkerbung 23 verfügt, in welche der Steg 19 des Klemmclips 16 abschnittsweise eintaucht.

Um das Verdrehen der Klemmhülse 15 relativ zum Klemmclip 16 bzw. zur Gasleitung 12 zu ermöglichen, ist ein Endabschnitt 24 der Klemmhülse 15 sechseckförmig derart konturiert, dass an demselben ein Schraubenschlüssel angelegt werden kann, um so unter Zuhilfenahme eines Schraubenschlüssels die Klemmhülse 15 zu verdrehen.

### Bezugszeichenliste

- 10: Ventilkörper
- 11: Anschlusselement
- 12: Gasleitung
- 13: Rand
- 14: Dichtungselement
- 15: Klemmhülse
- 16: Klemmclip
- 17: Vorsprung
- 18: Ausnehmung
- 19: Steg
- 20: Fläche
- 21: Ringsegment
- 22: Ringsegment
- 23: Einkerbung
- 24: Endabschnitt

## Patentansprüche

1. Vorrichtung zur Befestigung einer Gasleitung an einem Gasventil, nämlich zur Befestigung einer Gasleitung an einem Anschlusselement eines Ventilkörpers des Gasventils, wobei die Vorrichtung bei der Befestigung der Gasleitung am Anschlusselement die Gasleitung mit einem Abschnitt gegen ein vom Anschlusselement aufgenommenes Dichtelement drückt, mit einer auf die Gasleitung aufschiebbaren Klemmhülse (15) und mit einem am Anschlusselement des Ventilkörpers oder am Ventilkörper angreifenden und mit der Klemmhülse (15) derart zusammenwirkenden Klemmclip (16), dass der Klemmclip (16) mit einem Steg (19) an einer konturierten Fläche (20) der Klemmhülse (15) anliegt, und dass durch Verdrehen der Klemmhülse (15) relativ zur Gasleitung und relativ zum Klemmclip (16) der Steg (19) des Klemmclips (16) an unterschiedlichen Abschnitten der konturierten Fläche (20) anliegt und so eine axiale Relativbewegung zwischen der Gasleitung und dem Anschlusselement bewirkt.

2. Vorrichtung nach Anspruch 1, **dadurch gekennzeichnet, dass** beim Verdrehen der Klemmhülse (15) relativ zur Gasleitung in einer ersten Richtung das Zusammenspiel von Klemmhülse (15) und Klemmclip (16) eine solche axiale Relativbewegung zwischen der Gasleitung und dem Anschlusselement zum Montieren der Gasleitung an dem Anschlusselement bewirkt, dass ein Rand der Gasleitung stärker gegen das vom Anschlusselement aufgenommenes Dichtelement drückt, und dass beim Verdrehen der Klemmhülse (15) relativ zur Gasleitung in einer zweiten, entgegen gesetzten Richtung das Zusammenspiel von Klemmhülse (15) und Klemmclip (16) eine solche axiale Relativbewegung zwischen der Gasleitung und dem Anschlusselement zum Demontieren der Gasleitung an dem Anschlusselement bewirkt, dass der Rand der Gasleitung weniger gegen das vom Anschlusselement aufgenommenes Dichtelement drückt.

3. Vorrichtung nach Anspruch 1 oder 2, **dadurch gekennzeichnet, dass** die Fläche (20) der Klemmhülse (15), die mit dem Steg (19) des Klemmclips (16) zusammenwirkt, zwei gegenläufige, schraubenförmig konturierte Ringsegmente (21, 22) aufweist.

4. Vorrichtung nach Anspruch 3, **dadurch gekennzeichnet, dass** die schraubenförmig konturierten Ringsegmente (21, 22) sich jeweils über in etwa 180° erstrecken.

5. Vorrichtung nach Anspruch 3 oder 4, **dadurch gekennzeichnet, dass** die schraubenförmig konturierten Ringsegmente (21, 22) in Axialrichtung gesehen einen sich verändernde Erhebung aufweisen.

6. Vorrichtung nach einem der Ansprüche 3 bis 5, **dadurch gekennzeichnet, dass** die schraubenförmig konturierten Ringsegmente (21, 22) in Axialrichtung gesehen einen sich verändernden Abstand von dem Rand der Gasleitung und damit von dem vom Anschlusselement aufgenommenen Dichtelement aufweisen.

7. Gasventil, mit einem Ventilkörper und mit am Ventilkörper ausgebildeten Anschlusselementen zum Anschluss jeweils einer Gasleitung, nämlich zumindest einem Anschlusselement zum Anschluss einer Eingangsgasleitung und zumindest einem Anschlusselement zum Anschluss einer Ausgangsgasleitung, wobei die oder jede Gasleitung am jeweiligen Anschlusselement mit Hilfe einer Vorrichtung nach einem der Ansprüche 1 bis 6 befestigt ist.
